# EUROPÄISCHE PATENTSCHRIFT

(11) **EP 4 592 090 B1**
(45) Veröffentlichungstag und Bekanntmachung des Hinweises auf die Patenterteilung: **01.07.2026**
(21) Anmeldenummer: 24222726.2
(22) Anmeldetag: 23.12.2024
(51) Int. Cl.: B60B 1/06, B60B 3/00, B60B 3/04, B60B 3/10

(54) **FAHRZEUGRAD FÜR EINEN KRAFTWAGEN**
VEHICLE WHEEL FOR A MOTOR VEHICLE
ROUE DE VÉHICULE POUR UN VÉHICULE AUTOMOBILE

(30) Priorität: 19.01.2024 DE 102024101543
(43) Veröffentlichungstag der Anmeldung: 30.07.2025
(73) Patentinhaber: SSR Performance GmbH, 80939 München (DE)
(72) Erfinder: Vogt, Timo, 85354 Freising (DE)
(74) Vertreter: Witte, Weller & Partner Patentanwälte mbB

(56) Entgegenhaltungen:
- WO-A1-2023/126657
- DE-A1- 102012 107 692
- DE-A1- 102018 220 305
- DE-A1- 102019 211 054
- DE-A1- 4 141 464
- GB-A- 1 315 390

## Beschreibung

Die Erfindung betrifft ein Fahrzeugrad für einen Kraftwagen mit den Merkmalen des Oberbegriffs des Anspruchs 1.

Die Offenlegungsschrift DE 102019211 054 A1 offenbart ein einstückig durch Gießen oder Schmieden aus einer Metalllegierung hergestelltes Fahrzeugrad für einen Kraftwagen mit einer Radnabe, einer die Radnabe konzentrisch umschließenden Felge, einer Radscheibe, deren Mitte als die Radnabe ausgebildet ist, und radialen Speichen, die einen ringförmigen Zwischenraum zwischen einem Außenrand der Radscheibe und der Felge überbrücken, wobei die Speichen ein kurzes Stück radial nach innen auf eine Außenseite der Radscheibe reichen.

Die Offenlegungsschrift DE 10 2012 107 692 A1 offenbart ein Speichenrad aus einem faserverstärkten Kunststoff mit einer Nabe, einer Felge und sternförmig angeordneten Speichen, die die Felge mit der Nabe verbinden. Die Speichen weisen eine innere Wand in einer Radialebene des Rades und Rippen auf, die von der inneren Wand nach außen und nach innen abstehen. Äußere Rippen sind an radialen, von der Nabe zur Felge verlaufenden Rändern der inneren Wände und innere Rippen in einer Mitte zwischen den äußeren Rippen angeordnet. Sowohl die inneren Wände als auch alle Rippen der Speichen des bekannten Speichenrads erstrecken sich von der Nabe bis zur Felge. Zwischen den Speichen bestehen Durchgangsöffnungen, die sich von der Nabe bis zur Felge erstrecken.

Die Offenlegungsschrift DE 41 41 464 A1 offenbart ein Leichtmetallrad mit einer Nabe, einer Felge und Speichen, die die Felge mit der Nabe verbinden. Zwischen den Speichen weist das Leichtmetallrad dreiecksförmige Luftöffnungen auf, die sich von der Nabe bis zur Felge erstrecken. Die Speichen sind auf einer Innenseite des Leichtmetallrads verrippt.

Aufgabe der Erfindung ist, ein aerodynamisches, leichtes und steifes Fahrzeugrad für einen Kraftwagen vorzuschlagen.

Diese Aufgabe wird erfindungsgemäß durch die Merkmale des Anspruchs 1 gelöst.

Das erfindungsgemäße Fahrzeugrad, das für einen Kraftwagen vorgesehen ist, weist eine Radnabe, eine Felge, eine Radscheibe und Speichen auf, wobei die Radscheibe radial nach außen nicht bis zur Felge reicht, sondern ein ringförmiger Zwischenraum zwischen einem Außenrand der Radscheibe und der Felge besteht, der in einer Umfangsrichtung von den Speichen unterbrochen wird, die die Felge mit der Radscheibe verbinden. Es bestehen also Öffnungen zwischen dem Außenrand der Radscheibe und der Felge, die radial innen von dem Außenrand der Radscheibe, radial außen von der Felge und in Umfangsrichtung von den Speichen begrenzt werden.

Als Radnabe wird hier ein radial innerer Teil des Fahrzeugrads beziehungsweise der Radscheibe bezeichnet, welcher ein Zentrierloch zu einer Befestigung des Fahrzeugrads mit einem Zentralverschluss an einer Nabe des Kraftwagens und/oder auf einem zu dem Fahrzeugrad konzentrischen Lochkreis angeordnete Schraubenlöcher zu einer Befestigung des Fahrzeugrads mit seiner Radnabe an der Nabe des Kraftwagens aufweist. Der Zentralverschluss ist eine Befestigung des Fahrzeugrads auf einem Achsstummel an der Nabe des Kraftwagens mit einer einzigen, zentralen Mutter. Der Achsstummel weist ein Schraubengewinde für die Mutter auf. Das erfindungsgemäße Fahrzeugrad weist insbesondere das Zentrierloch oder alternativ die Schraubenlöcher auf, wobei die Erfindung Ausführungen des Fahrzeugrads 1 mit dem Zentrierloch und den Schraubenlöchern nicht ausschließt.

Erfindungsgemäß gehen die Speichen von der Radnabe bis zur Felge durch, das heißt die Speichen überbrücken nicht nur den ringförmigen Zwischenraum zwischen dem Außenrand der Radscheibe und der Felge, sondern sie verbinden auch die Radnabe unmittelbar mit der Felge und nicht nur mittelbar über die Radscheibe. Außerdem sind die Speichen auf einer Außenseite und auf einer Innenseite der Radscheibe über die Radscheibe erhaben. Als Außenseite und als Innenseite der Radscheibe werden eine axial nach außen und eine axial nach innen gerichtete Seite oder Oberfläche der Radscheibe bezeichnet im Unterschied zu dem Außenrand der Radscheibe, der der umlaufende, radial äußere Rand der Radscheibe ist.

Dadurch dass die Speichen nach innen bis zur Radnabe durchgehen und auf der Außenseite und der Innenseite der Radscheibe erhaben sind, bilden die Speichen eine Art Rippen, die die Radscheibe versteifen. Das ermöglicht eine dünne Radscheibe und damit ein leichtes Fahrzeugrad bei trotzdem hoher Steifigkeit zwischen der Radnabe und der Felge. Umgekehrt versteift auch die Radscheibe die Rippen, was das leichte Fahrzeugrad mit der trotzdem hohen Steifigkeit zwischen der Radnabe und der Felge ermöglicht.

Die Speichen können auf der Innenseite der Radscheibe einen Versatz den Speichen auf der Außenseite der Radscheibe aufweisen oder allgemein können die Speichen auf der Innenseite der Radscheibe an anderen Stellen angeordnet sein als auf der Außenseite der Radscheibe.

Für eine gute Aerodynamik eines Fahrzeugrads wäre eine von der Radnabe bis zur Felge durchgehende, geschlossene Radscheibe ohne Öffnungen wünschenswert, die bei einem Fahren mit dem Fahrzeugrad Luftströme auf einer Außenseite und einer Innenseite des Fahrzeugrads voneinander getrennt hält. Für eine Kühlung einer Radbremse, die sich bei an der Nabe des Kraftwagens befestigtem Fahrzeugrad an einer Umfangsstelle innerhalb der Felge auf der Innenseite der Radscheibe befindet, wäre ein möglichst großer Zwischenraum zwischen der Radnabe und der Felge anzustreben, der jedoch eine Verschlechterung der Aerodynamik des Fahrzeugrads zur Folge hätte. Das erfindungsgemäße Fahrzeugrad findet hier einen guten Kompromiss mit der Radscheibe, die nach außen nicht bis zur Felge reicht, sondern einen den umlaufenden Außenrand der Radscheibe umschließenden Zwischenraum zwischen der Radscheibe und der Felge für von der Innenseite auf die Außenseite des Fahrzeugrads oder umgekehrt strömende Luft lässt.

Auch aus optischen Gründen sind Öffnungen zwischen der Radnabe und der Felge eines Fahrzeugrads oder Speichenräder ohne Radscheibe oft gewünscht. Auch hier stellt das erfindungsgemäße Fahrzeugrad einen guten Kompromiss dar.

Die radial innen von dem Außenrand der Radscheibe, radial außen von der Felge und in Umfangsrichtung von den Speichen begrenzten Öffnungen des erfindungsgemäßen Fahrzeugrads müssen genügend groß für eine Belüftung der Radbremse zu ihrer Kühlung und sollten für eine gute Aerodynamik möglichst klein sein.

Die abhängigen Ansprüche haben vorteilhafte Ausgestaltungen und Weiterbildungen der Erfindung zum Gegenstand.

Das erfindungsgemäße Fahrzeugrad ist insbesondere einstückig, das heißt die Radnabe, die Radscheibe, die Speichen und die Felge sind als ein Stück hergestellt. Vorzugsweise besteht das erfindungsgemäße Fahrzeugrad aus Leichtmetall und/oder ist geschmiedet, das heißt durch Schmieden hergestellt. Als Leichtmetall werden hier Metalle und Metall aufweisenden Legierungen mit einer Dichte unter 5,0 g/cm³ aufgefasst. Beispielsweise weist das erfindungsgemäße Fahrzeugrad eine Aluminium, Magnesium und/oder Titan aufweisende Legierung auf.

Die Radnabe ist insbesondere auf der Innenseite und/oder auf der Außenseite der Radscheibe erhaben, steht in diesem Fall also axial nach innen und/oder nach außen über die Radscheibe über. Dadurch ist die Radnabe, die vorzugsweise einstückig in die Radscheibe übergeht, von der Radscheibe abgrenzbar, wenn auch bei einem beispielsweise gerundeten Übergang von der Radscheibe zur Radnabe nicht exakt abgrenzbar.

Eine bevorzugte Ausgestaltung der Erfindung sieht axial auf das Fahrzeugrad gesehen gerade von der Radnabe zur Felge durchgehende Speichen auf der Außenseite der Radscheibe vor.

Eine ebenfalls bevorzugte Ausgestaltung der Erfindung sieht einander einmal oder auch mehrfach kreuzende Speichen auf der Außenseite der Radscheibe vor. Letzteres bedeutet, dass eine Speiche auf der Außenseite der Radscheibe mehr als eine andere Speiche kreuzt.

Auf der Innenseite der Radscheibe kreuzen die Speichen bei Ausführungen der Erfindung einander nicht.

Aus optischen Gründen weisen bei Ausführungen der Erfindung die Speichen unterschiedliche Abstände in der Umfangsrichtung des Fahrzeugrads voneinander auf, insbesondere weisen in der Umfangsrichtung benachbarte Speichen abwechseln einen größeren und einen kleineren Abstand voneinander auf.

Während bei einer Ausführung der Erfindung die Speichen auf der Außenseite der Radscheibe axial auf das Fahrzeugrad gesehen gerade durchgehen, verlaufen die Speichen auf der Innenseite der Radscheibe bei dieser oder auch einer anderen Ausführung der Erfindung in einem Winkel zu ihrer Richtung in dem Zwischenraum zwischen dem Außenrand der Radscheibe und der Felge. Beispielsweise weisen die Speichen auf der Innenseite der Radscheibe einen Knick am Außenrand der Radscheibe auf.

Die Radscheibe ist vorzugsweise koaxial zur Felge und zur Radnabe und/oder die Radscheibe ist axial gesehen kreisförmig und/oder weist eine flache Kegelform auf.

In ihrer Mitte weist die Radscheibe bei einer Ausführung der Erfindung eine Hohlkegelstumpfform auf. Der Hohlkegelstumpf in der Mitte der Radscheibe kann beispielsweise in einen den Hohlkegelstumpf umschließenden Kreisring in einer Radialebene des Fahrzeugrads oder in einen flacheren Hohlkegelstumpf oder in einen entgegengerichteten Hohlkegelstumpf übergehen.

Eine bevorzugte Ausführung der Erfindung sieht einen - vorzugsweise axial niedrigen - ringförmigen, zur Innenseite abstehenden Kragen am Außenrand der Radscheibe vor. Der Kragen erhöht insbesondere eine Verwindungssteifigkeit der Radscheibe und kann abhängig von seiner Größe und Formgebung die Aerodynamik des erfindungsgemäßen Fahrzeugrads verbessern.

Die Radscheibe ist insbesondere an einer Außenseite der Felge oder jedenfalls zwischen einer Radialmittelebene der Felge und der Außenseite der Felge angeordnet. Die Außenseite der Felge ist deren in axialer Richtung äußere Seite. Die Radialmittelebene ist eine Radialebene des Fahrzeugrads in axialer Richtung in einer Mitte der Felge. Vorzugsweise befindet sich die Radscheibe näher an der Außenseite als an der axialen Mitte der Felge.

Sämtliche in der Beschreibung genannten und/oder der Zeichnung dargestellten Merkmale können einzeln für sich oder in jeder beliebigen Kombination bei Ausführungen der Erfindung verwirklicht sein. Ausführungen der Erfindung, die nicht alle, sondern nur einen Teil der Merkmale eines Anspruchs, auch des unabhängigen Anspruchs, aufweisen, sind möglich.

Die Erfindung wird nachfolgend anhand eines in der Zeichnung dargestellten Ausführungsbeispiels näher erläutert. Es zeigen:
Figur 1 eine perspektivische Darstellung eines Fahrzeugrads für einen Kraftwagen gemäß der Erfindung schräg von außen;
Figur 2 das Fahrzeugrad aus Figur 1 in einer perspektivischen Darstellung schräg von innen;
Figur 3 eine Stirnansicht auf eine Außenseite des Fahrzeugrads aus Figuren 1 und 2;
Figur 4 eine Stirnansicht auf eine Innenseite des Fahrzeugrads aus Figuren 1 bis 3;
Figur 5 eine radiale Ansicht des Fahrzeugrads aus Figuren 1 bis 4; und
Figur 6 einen Achsschnitt des Fahrzeugrads aus Figuren 1 bis 5.

Das in der Zeichnung dargestellte, erfindungsgemäße Fahrzeugrad 1 ist für einen nicht dargestellten Kraftwagen vorgesehen. Es weist eine Radnabe 2, eine Radscheibe 3, Speichen 4 und eine Felge 5 auf, wobei die Felge 4 die Radnabe 2 koaxial umschließt und die Radscheibe 3 ebenfalls koaxial zur Radnabe und zur Felge 4 nahe einer hier als Außenseite 6 bezeichneten Seite der Felge 4 angeordnet ist.

Das Fahrzeugrad 1 ist einstückig durch Schmieden aus einem Leichtmetall, das heißt einer ein Leichtmetall wie Aluminium, Magnesium und/oder Titan aufweisenden Legierung hergestellt. Einstückig bedeutet, dass die Radnabe 2, die Radscheibe 3, die Speichen 4 und die Felge5 - im Ausführungsbeispiel durch Schmieden - aus einem Stück hergestellt sind.

Die Radnabe 2 ist ein radial innerer Bereich der Radscheibe 3, der ein Zentrierloch 7 der Fahrzeugrads 1 konzentrisch umschließt und der Schraubenlöcher zur Befestigung der Fahrzeugrads 1 mit seiner Radnabe 2 an einer nicht dargestellten Nabe des Kraftwagens aufweist. Das Zentrierloch 7 in der Radnabe 2 des erfindungsgemäßen Fahrzeugrads 1 dient einer Befestigung des Fahrzeugrads 1 mit einem nicht dargestellten Zentralverschluss an einer Nabe des Kraftwagens. Der Zentralverschluss ist eine Befestigung des Fahrzeugrads 1 auf einem Achsstummel an der Nabe des Kraftwagens mit einer einzigen, zentralen Mutter. Der Achsstummel weist ein Schraubengewinde für die Mutter auf.

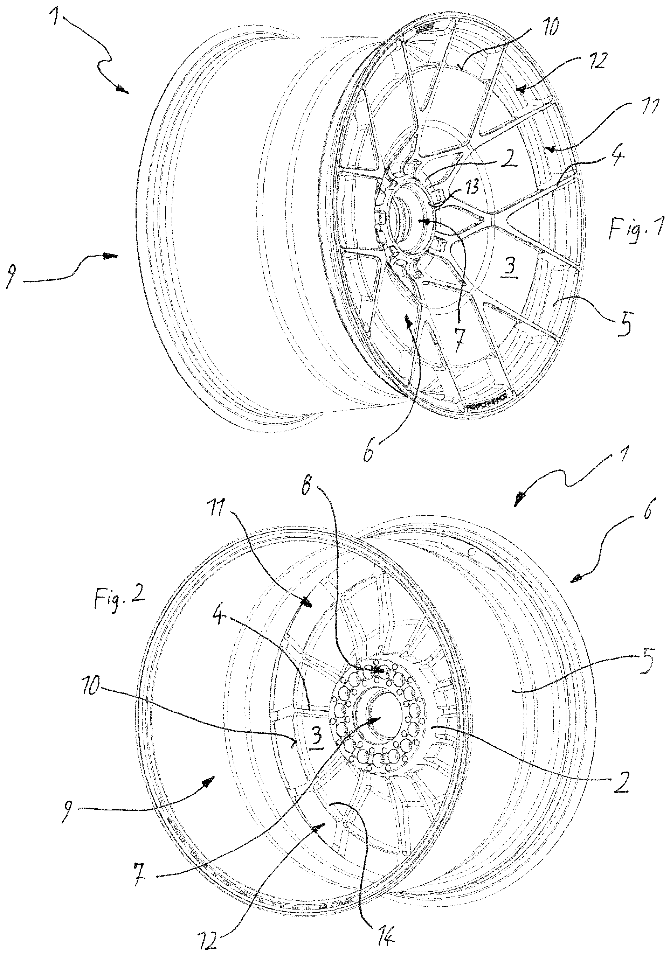

Im Ausführungsbeispiel weist die Radnabe 1 einen das Zentrierloch 7 konzentrisch umschließenden, axial niedrigen Kragen 13 auf, der über die Außenseite 6 der Radscheibe 3 erhaben ist (siehe Figuren 1, 3 und 6).

Auf einer der Außenseite 6 gegenüberliegenden Innenseite 9 weist die Radnabe 2 einen das Zentrierloch 7 konzentrisch umschließenden, zylindrischen Ring auf (siehe Figuren 2, 4 und 6), der über die Innenseite 9 der Radscheibe 3 erhaben beziehungsweise von der Innenseite 9 der Radscheibe 3 absteht.

Die Schraubenlöcher sind auf einem gedachten, das Zentrierloch 7 konzentrisch umschließenden Lochkreis angeordnet. Im Ausführungsbeispiel weist das Fahrzeugrad 1 keine Schraubenlöcher, sondern anstelle von Schraubenlöchern Sacklöcher 8 auf der Innenseite 9 der Radnabe 2 auf. Die Sacklöcher 8 dienen einer Drehmomentübertragung zwischen dem Fahrzeugrad 1 und der Nabe des Kraftwagens. In ein oder einige der Sacklöcher 8 greifen achsparallel von der Nabe des Kraftwagens abstehende Zapfen, wenn das Fahrzeugrad 1 mit dem Zentralverschluss an der Nabe des Kraftwagens montiert ist.

Das Fahrzeugrad 1 wird entweder mit dem Zentralverschluss an der Nabe des Kraftwagens montiert oder es weist Schraubenlöcher zu einer herkömmlichen Befestigung mit Radschrauben auf.

Die Radnabe 2 geht einstückig und ohne Zwischenraum in die Radscheibe 3 über, die in axialer Richtung nur einen Bruchteil so dick wie die Radnabe 2 in der axialen Richtung lang ist.

Axial gesehen ist die Radscheibe 3 kreisförmig beziehungsweise kreisringförmig, sie weist einen kreisförmigen, umlaufenden radial äußeren Außenrand 10 auf.

Ein radial innerer, die Radnabe 2 umschließender, kreisringförmiger Abschnitt der Radscheibe 3 ist im Ausführungsbeispiel hohlkegelstumpfförmig, wobei sich eine Hohl- oder Innenseite des Hohlkegelstumpfs auf der Außenseite 6 der Radscheibe 3 befindet. Außen an den hohlkegelstumpfförmigen, radial inneren Abschnitt der Radscheibe 3 schließt sich ein radial äußerer, ebenfalls kreisringförmiger Abschnitt der Radscheibe 3 an, der eben sein, das heißt sich in einer Radialebene des Fahrzeugrads 1 befinden kann. Im Ausführungsbeispiel weist der radial äußere Abschnitt der Radscheibe 3 ebenfalls eine Hohlkegelstumpfform auf, allerdings mit einem sehr flachen Kegelwinkel. Möglich ist auch eine ebene Radscheibe 3 in der Radialebene des Fahrzeugrads 3 oder eine Radscheibe 3 mit einer von innen nach außen durchgehenden Hohlkegelstumpfform mit einem einheitlichen und vorzugsweise sehr flachen Kegelwinkel (nicht dargestellt). Die Erfindung ist nicht auf die hier erläuterten Formen der Radscheibe 3 beschränkt.

Der Außenrand 10 der Radscheibe 3 weist einen kleineren Durchmesser als ein Innendurchmesser der Felge 5 auf derart, dass ein kreisringförmiger Zwischenraum 11 zwischen der Felge 5 und der Radscheibe 3 besteht. Dadurch sind Öffnungen 12 zwischen der Radscheibe 3 und der Felge 5 gebildet, die radial innen von der Radscheibe 3, radial außen von der Felge 5 und in einer Umfangsrichtung von den Speichen 4 begrenzt werden. Der Zwischenraum 11 beziehungsweise die Öffnungen 12 dienen einer Belüftung einer nicht dargestellten Radbremse im Inneren der Fahrzeugrads 1 und sollten aus aerodynamischen Gründen in radialer Richtung schmal sein. Im Ausführungsbeispiel weist der Zwischenraum 11 zwischen der Radscheibe 3 und der Felge 5 eine radiale Breite von etwa12-15% und nicht mehr als 17% oder 20% eines Radius der Felge 5 beziehungsweise des Fahrzeugrads 1 auf, wobei der Radius ein Halb eines Außendurchmessers der Felge 5 ist.

An ihrem Außenrand 10 weist die Radscheibe 3 einen ringförmigen, axial niedrigen und auf der Innenseite 9 abstehenden Kragen 14 auf, der eine Steifigkeit der Radscheibe 3 erhöht und eine Aerodynamik des Fahrzeugrads 1 verbessert.

Die Speichen 4 gehen innen von der Radnabe 2 nach außen zur Felge 5 durch, das heißt die Speichen 4 verbinden die Radnabe 2 und die Felge 5, wobei die Speichen 4 auch den kreisringförmigen Zwischenraum 11 zwischen der Radscheibe 3 und der Felge 5 überbrücken.

Die Speichen 4 sind sowohl auf der Außenseite 6 als auch auf der Innenseite 9 der Radscheibe 3 über die Radscheibe 3 erhaben derart, dass die Speichen 4 eine Art Rippen auf der Außenseite 6 und auf der Innenseite 9 der Radscheibe 3 bilden, die die Radscheibe 3 versteifen. Dadurch lässt sich mit vergleichsweise filigranen, das heißt einen kleinen Querschnitt aufweisenden Speichen 4 ein stabiles Fahrzeugrad 1 herstellen, dessen Felge 5 steif mit der Radnabe 2 verbunden ist. Umgekehrt versteift auch die Radscheibe 3 die Speichen 4.

Axial auf die Außenseite 6 des erfindungsgemäßen Fahrzeugrads 1 gesehen verlaufen die Speichen 4 gerade von innen von der Radnabe 2 nach außen bis zur Felge 5. Dabei verlaufen die Speichen 4 im dargestellten und beschriebenen Ausführungsbeispiel der Erfindung nicht radial sondern in einem Winkel zu Radialen des Fahrzeugrads 1 derart, dass sich die Speichen 4 auf der Außenseite 6 der Radscheibe 2 kreuzen. Im Ausführungsbeispiel kreuzen sich die Speichen 4 einmal am Übergang vom radial inneren, hohlkegelstumpfförmigen Abschnitt der Radscheibe 3 zu dem radial äußeren, lochscheibenförmigen und nahezu ebenen Abschnitt der Radscheibe 3.

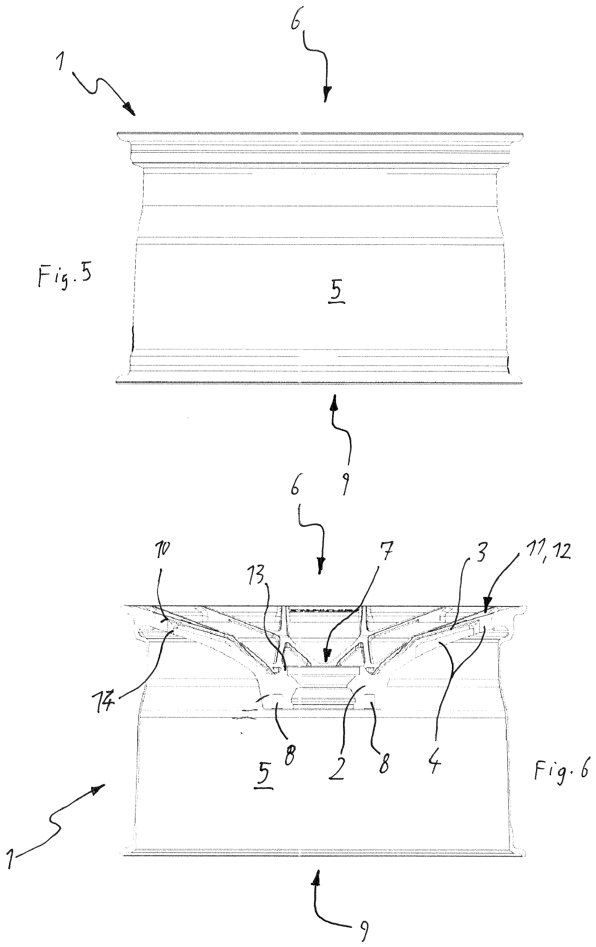

Radial zum Fahrzeugrad 1 gesehen verlaufen die Speichen 4 entsprechend der Form der Radscheibe 3 (siehe Figur 6).

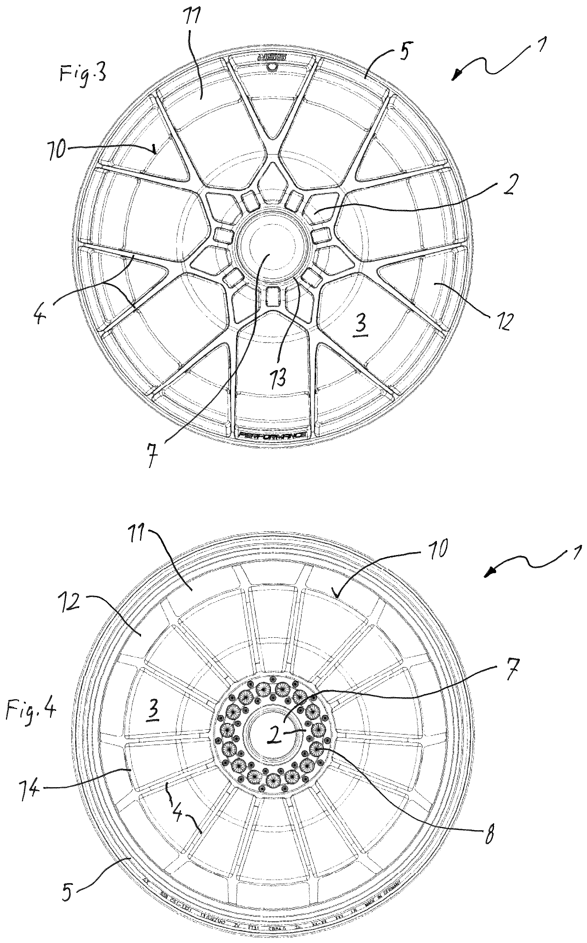

Auf der Innenseite 9 der Radscheibe 3 verlaufen die Speichen 4 axial auf das Fahrzeugrad 1 gesehen nahezu radial und knicken am Außenrand 10 der Radscheibe 3 in einen größeren Winkel zu den Radialen ab, wie insbesondere in Figur 4 zu sehen ist. Dabei knicken die Speichen 4 abwechselnd in entgegengesetzten Richtungen ab. Im Zwischenraum 11 zwischen der Radscheibe 3 und der Felge 5 wird der Verlauf der Speichen 4 durch ihren Verlauf beziehungsweise ihre Anordnung auf der Außenseite 6 der Radscheibe 3 bestimmt.

Auf der Innenseite 9 der Radscheibe 3 weisen einander in einer Umfangsrichtung des Fahrzeugrads 1 benachbarte Speichen 4 abwechselnd einen kleineren und einen größeren Abstand in der Umfangsrichtung auf.

Eine andere Formgebung und Anordnung der Speichen 4 als die vorstehend beschriebene und in der Zeichnung dargestellte schließt die Erfindung nicht aus.

## Patentansprüche

1. Fahrzeugrad für einen Kraftwagen, mit einer Radnabe (2), einer Felge (5) und Speichen (4), wobei die Speichen (4) von der Radnabe (2) bis zur Felge (5) durchgehen, wobei das Fahrzeugrad (1) eine Radscheibe (3) aufweist und die Speichen (4) auf einer Außenseite (6) und auf einer Innenseite (9) der Radscheibe (3) über die Radscheibe (3) erhaben sind, **dadurch gekennzeichnet, dass** zwischen der Felge (5) und der Radscheibe (3) Öffnungen (12) vorhanden sind.

2. Fahrzeugrad nach Anspruch 1, **dadurch gekennzeichnet, dass** das Fahrzeugrad (1) einstückig ist und/oder dass das Fahrzeugrad (1) aus Leichtmetall hergestellt ist und/oder dass das Fahrzeugrad (1) geschmiedet ist.

3. Fahrzeugrad nach Anspruch 1 oder 2, **dadurch gekennzeichnet, dass** die Radnabe (2) auf der Innenseite (9) und/oder auf der Außenseite (6) der Radscheibe (3) über die Radscheibe (3) erhaben ist.

4. Fahrzeugrad nach einem oder mehreren der Ansprüche 1 bis 3, **dadurch gekennzeichnet, dass** die Speichen (4) auf der Außenseite (6) der Radscheibe (3) gerade von der Radnabe (2) zur Felge (5) durchgehen und/oder dass sich die Speichen (4) auf der Außenseite (6) der Radscheibe (3) kreuzen.

5. Fahrzeugrad nach einem oder mehreren der vorhergehenden Ansprüche, **dadurch gekennzeichnet, dass** die Speichen (4) auf der Innenseite (9) der Radscheibe (3) kreuzungsfrei verlaufen und/oder dass in einer Umfangsrichtung der Radscheibe (3) benachbarte Speichen (4) in der Umfangsrichtung abwechselnd einen größeren und einen kleineren Abstand voneinander aufweisen.

6. Fahrzeugrad nach einem oder mehreren der vorhergehenden Ansprüche, **dadurch gekennzeichnet, dass** axial auf das Fahrzeugrad (1) gesehen die Speichen (4) innerhalb der Öffnungen (12) zwischen der Felge (5) und der Radscheibe (3) einen Winkel zu den Speichen (4) auf der Innenseite (9) der Radscheibe (3) aufweisen.

7. Fahrzeugrad nach einem oder mehreren der vorhergehenden Ansprüche, **dadurch gekennzeichnet, dass** die Radscheibe (3) koaxial zur Felge (5) und zur Radnabe (2) ist und/oder dass die Radscheibe (3) kreisförmig ist und/oder dass die Radscheibe (3) eine flache Kegelform aufweist.

8. Fahrzeugrad nach einem oder mehreren der vorhergehenden Ansprüche, **dadurch gekennzeichnet, dass** die Radscheibe (3) in ihrer Mitte hohlkegelstumpfförmig ist.

9. Fahrzeugrad nach einem oder mehreren der vorhergehenden Ansprüche, **dadurch gekennzeichnet, dass** die Radscheibe (3) an ihrem Außenrand (10) einen zur Innenseite (9) abstehenden, umlaufenden, ringförmigen Kragen (14) aufweist.

10. Fahrzeugrad nach einem oder mehreren der vorhergehenden Ansprüche, **dadurch gekennzeichnet, dass** die Radscheibe (3) an einer Außenseite der Felge (5) oder jedenfalls zwischen einer Radialmittelebene in einer axialen Mitte der Felge (5) und der Außenseite der Felge (5) angeordnet ist.

## Claims

1. Vehicle wheel for a motor vehicle, comprising a wheel hub (2), a rim (5), and spokes (4), wherein the spokes (4) extend from the wheel hub (2) to the rim (5), wherein the vehicle wheel (1) has a wheel disc (3) and the spokes (4) on an outer side (6) and on an inner side (9) of the wheel disc (3) are raised above the wheel disc (3), **characterized in that** openings (12) are present between the rim (5) and the wheel disc (3).

2. Vehicle wheel according to claim 1, **characterized in that** the vehicle wheel (1) is made in one piece, **and/or in that** the vehicle wheel (1) is made of light metal, **and/or in that** the vehicle wheel (1) is forged.

3. Vehicle wheel according to claim 1 or 2, **characterized in that** the wheel hub (2) on the inner side (9) and/or on the outer side (6) of the wheel disc (3) is raised above the wheel disc (3).

4. Vehicle wheel according to one or more of claims 1 to 3,
**characterized in that** the spokes (4) on the outer side (6) of the wheel disc (3) extend straight from the wheel hub (2) to the rim (5), **and/or in that** the spokes (4) on the outer side (6) of the wheel disc (3) are crossed.

5. Vehicle wheel according to one or more of the preceding claims,
**characterized in that** the spokes (4) on the inner side (9) of the wheel disc (3) run without crossing, **and/or in that** spokes (4) that are adjacent in a circumferential direction of the wheel disc (3) alternately have a relatively large and a relatively small spacing from each other in the circumferential direction.

6. Vehicle wheel according to one or more of the preceding claims,
**characterized in that** when the vehicle wheel (1) is viewed axially, the spokes (4) within the openings (12) between the rim (5) and the wheel disc (3) are at an angle to the spokes (4) on the inner side (9) of the wheel disc (3).

7. Vehicle wheel according to one or more of the preceding claims,
**characterized in that** the wheel disc (3) is coaxial with respect to the rim (5) and to the wheel hub (2), **and/or in that** the wheel disc (3) is circular, **and/or in that** the wheel disc (3) has a flat conical shape.

8. Vehicle wheel according to one or more of the preceding claims,
**characterized in that** the wheel disc (3) is hollow-frustoconical in its center.

9. Vehicle wheel according to one or more of the preceding claims,
**characterized in that** the wheel disc (3) on its outer edge (10) has an encircling, annular collar (14) projecting toward the inner side (9).

10. Vehicle wheel according to one or more of the preceding claims,
**characterized in that** the wheel disc (3) is arranged on an outer side of the rim (5) or at least between a radial center plane in an axial center of the rim (5) and the outer side of the rim (5).

## Revendications

1. Roue de véhicule pour un véhicule automobile, comportant un moyeu de roue (2), une jante (5) et des rayons (4), dans laquelle les rayons (4) s'étendent du moyeu de roue (2) à la jante (5), dans laquelle la roue de véhicule (1) présente un disque de roue (3) et les rayons (4) sont en relief par rapport au disque de roue (3) sur un côté extérieur (6) et sur un côté intérieur (9) du disque de roue (3),
**caractérisée en ce que** des ouvertures (12) sont présentes entre la jante (5) et le disque de roue (3).

2. Roue de véhicule selon la revendication 1, **caractérisée en ce que** la roue de véhicule (1) est en une seule pièce **et/ou en ce que** la roue de véhicule (1) est fabriquée en un métal léger **et/ou en ce que** la roue de véhicule (1) est forgée.

3. Roue de véhicule selon la revendication 1 ou 2, **caractérisée en ce que** le moyeu de roue (2) est en relief par rapport au disque de roue (3) sur le côté intérieur (9) et/ou sur le côté extérieur (6) du disque de roue (3).

4. Roue de véhicule selon l'une ou plusieurs des revendications 1 à 3,
**caractérisée en ce que** les rayons (4) sur le côté extérieur (6) du disque de roue (3) s'étendent en ligne droite du moyeu de roue (2) à la jante (5) **et/ou en ce que** les rayons (4) se croisent sur le côté extérieur (6) du disque de roue (3).

5. Roue de véhicule selon l'une ou plusieurs des revendications précédentes, **caractérisée en ce que** les rayons (4) s'étendent sans se croiser sur le côté intérieur (9) du disque de roue (3) **et/ou en ce que,** dans une direction circonférentielle du disque de roue (3), des rayons (4) voisins présentent alternativement une distance plus grande et une distance plus petite entre eux dans la direction circonférentielle.

6. Roue de véhicule selon l'une ou plusieurs des revendications précédentes, **caractérisée en ce que,** vus axialement sur la roue de véhicule (1), les rayons (4) à l'intérieur des ouvertures (12) entre la jante (5) et le disque de roue (3) présentent un angle par rapport aux rayons (4) sur le côté intérieur (9) du disque de roue (3).

7. Roue de véhicule selon l'une ou plusieurs des revendications précédentes, **caractérisée en ce que** le disque de roue (3) est coaxial à la jante (5) et au moyeu de roue (2) **et/ou en ce que** le disque de roue (3) est circulaire **et/ou en ce que** le disque de roue (3) présente une forme conique plate.

8. Roue de véhicule selon l'une ou plusieurs des revendications précédentes, **caractérisée en ce que** le disque de roue (3) est en forme de cône tronqué creux en son centre.

9. Roue de véhicule selon l'une ou plusieurs des revendications précédentes, **caractérisée en ce que** le disque de roue (3) présente sur son bord extérieur (10) une collerette (14) annulaire circonférentielle faisant saillie vers le côté intérieur (9).

10. Roue de véhicule selon l'une ou plusieurs des revendications précédentes, **caractérisée en ce que** le disque de roue (3) est disposé sur un côté extérieur de la jante (5) ou du moins entre un plan radial médian dans un centre axial de la jante (5) et le côté extérieur de la jante (5).
